# FASCICULE DE BREVET EUROPEEN

(11) **EP 2 303 512 B1**
(45) Date de publication et mention de la délivrance du brevet: **05.09.2012**
(21) Numéro de dépôt: 09784398.1
(22) Date de dépôt: 05.06.2009
(51) Int. Cl.: B25B 11/02, B62D 65/06, E05D 11/00

(54) **DISPOSITIF D'ASSEMBLAGE DES CHARNIERES SUPERIEURE ET INFERIEURE SUR UNE PORTE DE VEHICULE**
VORRICHTUNG ZUR MONTAGE DES OBEREN UND DES UNTEREN SCHARNIERS EINER FAHRZEUGTÜR
DEVICE FOR ASSEMBLING UPPER AND LOWER HINGES ON A VEHICLE DOOR

(30) Priorité: 28.07.2008 FR 0855174
(43) Date de publication de la demande: 06.04.2011
(73) Titulaire: Peugeot Citroën Automobiles Société Anonyme, 78140 Vélizy Villacoublay (FR)
(72) Inventeur: COLIN, Frédéric, F-77165 Soupplets (FR); DABREMONT, Lionel, F-28100 Dreux (FR)
(74) Mandataire: Fernandez, Francis Lionel
(86) Numéro de dépôt international: PCT/FR2009/051071
(87) Numéro de publication internationale: WO 2010/012917

(56) Documents cités:
- WO-A-02/45901
- DE-A1- 3 942 662
- DE-A1- 10 304 032
- JP-A- 63 017 189
- US-A- 6 122 819

## Description

La présente invention concerne un dispositif d'assemblage des charnières supérieure et inférieure sur une porte de véhicule, en particulier de véhicule automobile. Elle concerne, de plus, un procédé d'assemblage des charnières supérieure et inférieure sur une porte de véhicule au moyen d'un tel dispositif.

La présente invention concerne, par conséquent, la mise en place des charnières de porte sur les portes de véhicule, avec pour objectif d'assurer une bonne géométrie au montage des portes sur les véhicules en évitant des opérations de retouche importantes en bout de ligne de montage.

On connaît déjà des procédés et dispositifs de positionnement utilisés pour le montage de charnières sur une chaîne de fabrication automobile.

Ainsi, le document JP 63-017189 décrit un procédé d'assemblage de portes de véhicules automobiles. Deux robots sont montés sur des boggies, qui se déplacent parallèlement à la ligne d'assemblage et qui sont entraînés de manière synchrone avec une caisse de véhicule de la ligne d'assemblage. Les portes sont approvisionnées à partir de palettes et placées sur des socles de réception temporaires situés sur les boggies par des gabarits de manutention installés sur des bras des robots. Les portes sont fixées par des mécanismes d'assemblage des gabarits de manutention. Les charnières des portes sont amenées par rotation en position de préréglage par les organes de rotation sur les boggies. Après le positionnement des charnières supérieure et inférieure à l'aide d'un dispositif de centrage du gabarit de manutention, des charnières sont mises en place sur des parties de fixation de charnière de la caisse du véhicule et sont fixées par des boulons avec une machine à visser.

Ce dispositif d'assemblage présente toutefois l'inconvénient de comporter un verrouillage au sol, et d'être mis en place par le moyen d'un robot.

Le document US 6 122 819 décrit un dispositif pour positionner une paire de charnières sur une caisse de véhicule automobile, avant leur fixation sur la caisse. Le positionnement utilise un gabarit manuel, qui comporte des ergots espacés pour le mettre en place dans une position souhaitée sur la caisse du véhicule. Au moins trois mécanismes de blocage sont prévus pour fixer automatiquement le gabarit sur la caisse du véhicule, une fois que le gabarit a été manipulé pour être placé dans la position souhaitée. Des contacts de proximité actionnent les mécanismes de blocage au moment approprié dans le cycle de montage.

Ce dispositif de positionnement présente, toutefois, l'inconvénient d'être de grandes dimensions, de nécessiter, par conséquent, une assistance au poids. De plus, le mécanisme de verrouillage du gabarit est relativement complexe, par la nécessité de recourir à une multiplicité de vérins de serrage.

Le document FR 0759855 décrit également un dispositif de montage d'une charnière sur un élément de structure de véhicule automobile, qui comprend un gabarit autoporté déplaçable dans l'espace, lequel comporte sur un châssis :
- des moyens de positionnement sur l'élément de structure, qui comportent, pour chaque direction parmi trois directions d'espace différentes, un organe de butée et un organe de contre-butée, chaque organe de butée étant apte à appuyer l'élément de structure contre l'organe de contre-butée correspondant ;
- des moyens de fixation temporaire sur l'élément de structure ;
- des moyens de support de la charnière ;
- des moyens de déplacement desdits moyens de support permettant de présenter la charnière en un emplacement final sur l'élément de structure pour sa fixation sur l'élément de structure.

Ce dispositif de montage, qui s'applique à un type d'ouvrant différent de celui concerné par la présente invention, a l'inconvénient de nécessiter une assistance au poids.

On connaît également le document DE10304032 qui décrit un dispositif d'assemblage des charnières supérieure et inférieure sur une porte de véhicule, en particulier de véhicule automobile, qui présente la forme d'un gabarit et qui comporte les moyens suivants, pris en combinaison :
- des moyens d'appui et de serrage pour positionner le gabarit sur la porte de véhicule ;
- des moyens de mise en référence géométrique en X, Y, Z de la charnière supérieure de la charnière inférieure sur le gabarit.

On connaît également le document WO02/45901 qui concerne un procédé permettant d'assembler une portière de véhicule, qui comprend une partie structurale, des parties rapportées requises pour le montage et d'autres parties encore. Ce procédé permet d'obtenir des portières adaptées du mieux possible au véhicule et tenant compte de la dérive de tolérance. A cet effet, la partie structurale et les parties rapportées requises pour le montage sont positionnées sur une plaque calibrée dans des positions déplaçables et sont ensuite assemblées les unes aux autres. Le dispositif utilisé à cette fin comprend :
- des paliers de référence pour fixer la partie structurale dans les trois sens de coordonnées ;
- des paliers de référence pour fixer les parties rapportées requises pour le montage, leur déplacement dépendant des données enregistrées lors de la fabrication.

Le but de la présente invention est de fournir un nouveau dispositif d'assemblage des charnières supérieure et inférieure sur une porte de véhicule, en particulier de véhicule automobile, qui obvie aux inconvénients des dispositifs de positionnement et d'assemblage de l'art antérieur, et qui permet d'obtenir une excellente géométrie au montage des portes sur les véhicules sans qu'il soit nécessaire d'effectuer ensuite des opérations de retouche d'assemblage importantes en bout de ligne de montage des véhicules.

Un autre but de la présente invention est de fournir un tel dispositif d'assemblage, qui soit le plus léger possible, de manipulation manuelle aisée, et qui soit équipé de moyens de serrage simples.

Enfin, c'est également un but de la présente invention de fournir un nouveau dispositif d'assemblage et un procédé d'assemblage utilisant un tel nouveau dispositif, qui soient fiables, qui soient adaptés aux fortes cadences comme aux petites cadences de production automobile, et qui soient économiques.

Pour parvenir à ces buts, la présente invention a pour objet un dispositif d'assemblage des charnières supérieure et inférieure sur une porte de véhicule, en particulier de véhicule automobile, qui se présente sous la forme d'un gabarit comportant les moyens suivants, pris en combinaison :
- des moyens d'appui et de serrage pour positionner le gabarit sur la porte de véhicule,
- des moyens de maintien du gabarit en forme de crochet pour garantir le placage du gabarit selon la direction en X.
- des moyens de mise en référence géométrique en X, Y, Z et de bridage de la charnière supérieure sur le gabarit, et
- des moyens de mise en référence géométrique en X, Y, Z et de bridage de la charnière inférieure sur le gabarit.

Les moyens d'appui et de serrage pour positionner le gabarit sur la porte de véhicule comprennent une touche d'appui pour le positionnement du gabarit sur la porte selon la direction en Y.

De manière préférentielle, ces moyens d'appui et de serrage pour positionner le gabarit sur la porte de véhicule comprennent aussi une touche d'appui auxiliaire faisant fonction de positionnement auxiliaire selon la direction en X pour supprimer la rotation possible du gabarit, ladite touche d'appui auxiliaire étant constituée par une face sensiblement perpendiculaire au panneau de la porte.

Les moyens de maintien du gabarit, qui permettent de garantir le placage du gabarit selon la direction en X, sont constitués par un crochet, qui s'insère dans un trou de passage de la porte du véhicule et permet d'éviter que l'index du charnon mobile de la charnière inférieure ne sorte du poinçonnage de la doublure de la porte.

De préférence, ce trou de passage, dans lequel vient s'insérer le crochet, est le trou de passage du faisceau électrique.

Les moyens de mise en référence géométrique en X, Y, Z et de bridage de la charnière supérieure sur le gabarit comprennent un plan d'appui en Y qui vient se plaquer sur une surface plane du charnon fixe de la charnière supérieure, ladite surface plane étant la surface de la charnière supérieure destinée à venir en contact avec la caisse du véhicule.

Selon un mode préféré de réalisation de l'invention, c'est un premier trou de passage d'une vis de fixation de la charnière supérieure sur la caisse qui est utilisé pour le pilotage de la charnière supérieure sur le gabarit, et c'est un second trou de passage d'une seconde vis de fixation de la charnière supérieure sur la caisse qui est utilisé pour éviter la rotation de ladite charnière.

De manière similaire, les moyens de mise en référence géométrique en X, Y, Z et de bridage de la charnière inférieure sur le gabarit comprennent un plan d'appui en Y qui vient se plaquer sur une surface plane du charnon fixe de la charnière inférieure, ladite surface plane étant la surface de la charnière inférieure destinée à venir en contact avec la caisse du véhicule.

De manière similaire également, c'est un premier trou de passage d'une vis de fixation de la charnière inférieure sur la caisse qui est utilisé pour le pilotage de la charnière inférieure selon les directions en X et en Z sur le gabarit, et c'est un second trou de passage d'une seconde vis de fixation de la charnière inférieure sur la caisse qui est utilisé pour éviter la rotation de ladite charnière inférieure.

De préférence, un jeu d'environ 1 mm sur le diamètre des seconds trous de passage est prévu de façon à permettre la mise en position transitoire des charnières.

La présente invention a aussi pour objet un procédé d'assemblage des charnières supérieure et inférieure sur une porte de véhicule au moyen d'un dispositif d'assemblage - ou gabarit d'assemblage - conforme à celui décrit ci-dessus dans ses grandes lignes. Ce nouveau procédé d'assemblage comporte les étapes suivantes, prises en combinaison :
- on place les charnières supérieure et inférieure sur le gabarit,
- on vient indexer la charnière inférieure sur la porte,
- on place le crochet de maintien du gabarit dans le trou de passage du faisceau électrique,
- on met en place les moyens d'appui et de serrage pour positionner le gabarit sur la porte de véhicule, en plaçant la touche d'appui sur le cadre de la porte,
- on bloque l'ensemble du gabarit sur la porte du véhicule, et
- on visse les charnières supérieure et inférieure sur la porte du véhicule.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est un schéma illustrant l'opération d'assemblage des portes d'un véhicule sur une chaîne de fabrication automobile,
- la figure 2 représente, de manière schématique, le gabarit d'assemblage selon la présente invention,
- la figure 3 représente les moyens d'appui et de serrage pour positionner le gabarit sur la porte de véhicule,
- la figure 4 représente, de manière schématique également, les moyens de maintien du gabarit sur la porte du véhicule,
- la figure 5 représente le gabarit en position de serrage sur une porte de véhicule,
- les figures 6A et 6B représentent, de manière schématique, l'isostatisme intermédiaire de la charnière supérieure (figure 6A) et de la charnière inférieure (figure 6B) respectivement, sur le gabarit de l'invention.

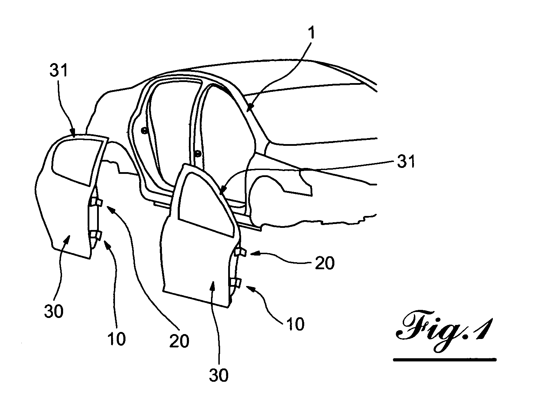

En référence à la figure 1, la présente invention concerne la mise en place de charnières de portes sur les portes avant et arrière d'un véhicule automobile, de façon à assurer une bonne géométrie au montage des portes, référencées 30 de manière générale, sur la caisse 1 du véhicule.

Les portes 30 concernées peuvent être des portes à cadre 31 pour l'insertion de vitres coulissantes, ou des portes sans cadre.

Chaque porte est montée mobile sur la caisse du véhicule par le moyen d'une charnière inférieure, référencée 10 de manière générale, et d'une charnière supérieure, référencée 20 de manière générale.

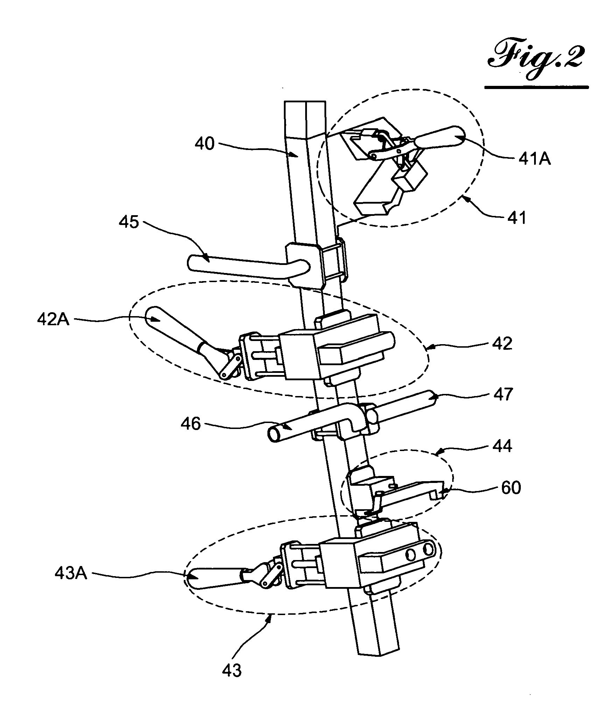

La mise en place des deux charnières 10, 20 sur une porte 30 s'effectue par le moyen d'un gabarit décrit ci-dessous, et représenté sur le dessin de la figure 2.

Le gabarit est constitué d'un corps principal 40, en forme de poutre sensiblement verticale, de section tubulaire carrée ou rectangulaire, et de différents moyens de positionnement et de serrage pour garantir la mise en référence en X, Y et Z, de la charnière supérieure 20 et de la charnière inférieure 10 par rapport à la porte 30. Ces différents moyens sont les suivantes :
- des moyens d'appui et de serrage, de référence générale 41, pour positionner le gabarit sur la porte de véhicule, qui comprennent une touche d'appui pour le positionnement du gabarit sur la porte selon la direction en Y et une touche d'appui faisant fonction de positionnement auxiliaire selon la direction en X pour supprimer la rotation possible du gabarit, comme il est décrit plus loin dans le texte,
- des moyens de maintien du gabarit, référencés 44, en forme de crochet, qui permet de garantir le placage du gabarit selon la direction en X.
- des moyens de mise en référence géométrique en X, Y, Z et de bridage, référencés 42 de manière générale, de la charnière supérieure 20 sur le gabarit, et
- des moyens de mise en référence géométrique en X, Y, Z et de bridage, référencés 43 de manière générale, de la charnière inférieure 10 sur le gabarit.

Il est prévu également une première poignée de manoeuvre 45 et une seconde poignée de manoeuvre 46 pour permettre la prise en main du gabarit par un opérateur de montage. La référence 47 désigne un doigt ayant fonction d'avaloir.

Le gabarit est, de préférence, monté par son extrémité supérieure sur un préhenseur câble non représenté. Le gabarit peut être facilement orienté par un opérateur de montage selon tous les degrés de liberté d'orientation.

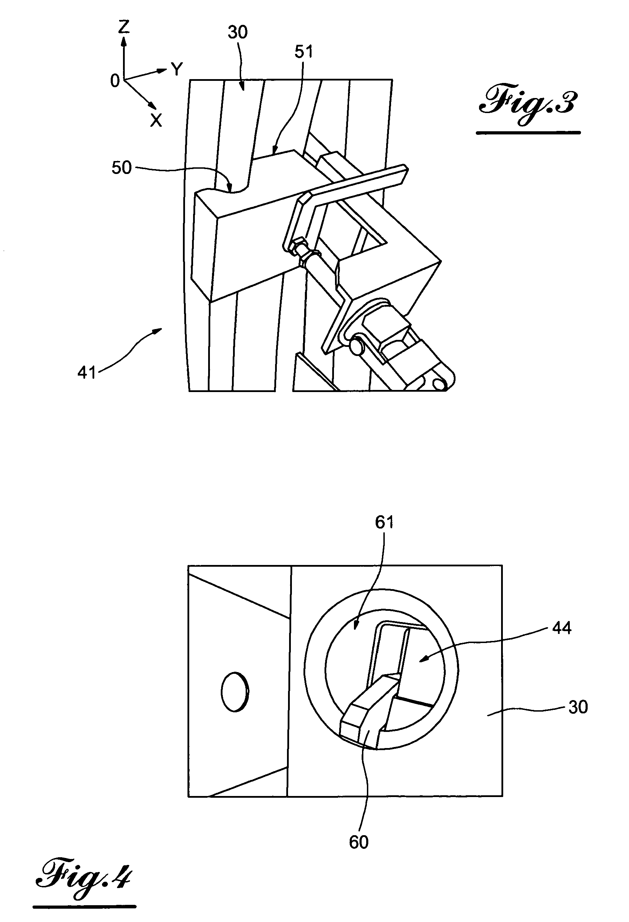

Les moyens d'appui et de serrage 41 pour le positionnement du gabarit sur la porte de véhicule sont mieux représentés sur le dessin de la figure 3. Ils comportent une touche d'appui 50 pour la mise en position du gabarit 30 sur la porte 3 selon la direction en Y et le blocage du degré de liberté des charnières, et une touche d'appui auxiliaire en X, référencée 51, laquelle supprime la rotation du gabarit. La touche d'appui auxiliaire 51 est constituée par une face sensiblement perpendiculaire au panneau de la porte 30. Une poignée 41A (représentée sur la figure 2) permet le serrage des moyens d'appui décrits ci-dessus sur la porte.

En référence de nouveau à la figure 2, la référence 42 désigne les moyens de mise en référence géométrique en X, Y, Z et de bridage de la charnière supérieure 20 sur le gabarit. Ils comprennent un appui plan selon la direction en X pour le charnon mobile de la charnière supérieure 20 sur la porte 30, comme il sera exposé plus loin dans le texte. Une poignée 42A permet le bridage manuel de la charnière supérieure 20.

La référence 43 désigne les moyens de mise en référence géométrique en X, Y, Z et de bridage de la charnière supérieure 10 sur le gabarit. Ils permettent le pilotage ou indexation de la charnière inférieure 10 selon les directions en Y et en Z et un appui plan selon la direction en X du charnon mobile de la charnière inférieure 10 par rapport à la porte 30. Une poignée 43A permet le bridage manuel de la charnière inférieure 10.

On a représenté aussi sur la figure 4 les moyens de maintien 44 du gabarit, qui permettent de garantir le placage du gabarit selon la direction en X. Ils sont constitués par un crochet 60 qui s'insère dans le trou de passage 61 du faisceau électrique pour maintenir le gabarit en place. Ce crochet, d'une part, permet d'éviter que l'index du charnon mobile de la charnière inférieure 10 ne sorte du poinçonnage de la doublure et, d'autre part, garantit le plaquage selon la direction X du gabarit sur la porte 30.

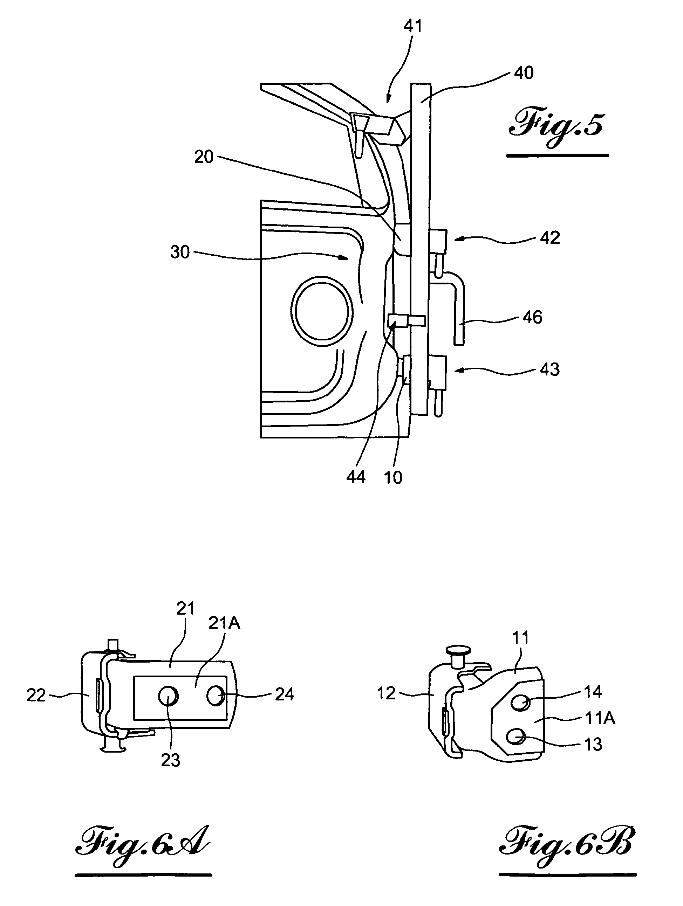

La figure 5 est une vue en perspective du gabarit de l'invention et de ses points d'appui et d'indexage sur une porte de véhicule 30, sur laquelle les différents moyens de positionnement des charnières 10 et 20 exposés ci-dessus, à savoir les moyens 41, 42, 43 et 44 montés sur le corps principal 40 du gabarit sont en position de serrage sur la porte 30 du véhicule.

La figure 6A représente, de manière très schématique, l'isostatisme intermédiaire de la charnière supérieure 20 sur le gabarit. La charnière supérieure 20 comprend, de manière classique, un charnon fixe 21 destiné à être fixé sur la caisse du véhicule et un charnon mobile 22 destiné à être fixé sur l'ouvrant, à savoir la porte 30 dans l'exemple décrit. La face 21A du charnon fixe 21, qui est destinée à venir en contact avec la caisse, forme un plan d'appui de la charnière sur le gabarit selon la direction en Y. Un premier trou de passage, référencé 23, d'une vis de fixation de la charnière supérieure 20 sur la caisse est utilisé pour le pilotage de la charnière supérieure sur le gabarit. Un second trou de passage, référencé 24, d'une seconde vis de fixation de la charnière supérieure 20 sur la caisse est utilisé pour éviter la rotation de la charnière 20, un jeu d'environ 1 mm sur le diamètre étant prévu de façon à permettre la mise en position transitoire de la charnière supérieure. La mise en référence géométrique finale de cette charnière 20 est ensuite obtenue par le serrage du gabarit sur la porte 30.

La figure 6B représente, de manière très schématique également, l'isostatisme intermédiaire de la charnière inférieure 10 sur le gabarit. La charnière inférieure 10 comprend, de manière similaire à la charnière supérieure 20, un charnon fixe 11 destiné à être fixé sur la caisse du véhicule et un charnon mobile 12 destiné à être fixé sur l'ouvrant, à savoir la porte 30 dans l'exemple décrit. La face 11A du charnon fixe 11, qui est destinée à venir en contact avec la caisse, forme un plan d'appui de la charnière sur le gabarit selon la direction en Y. Un premier trou de passage, référencé 13, d'une vis de fixation de la charnière inférieure 10 sur la caisse est utilisé pour le pilotage de la charnière inférieure selon les directions en X et en Z sur le gabarit. Un second trou de passage, référencé 14, d'une seconde vis de fixation de la charnière inférieure 10 sur la caisse est utilisé pour éviter la rotation de la charnière 10, un jeu d'environ 1 mm sur le diamètre étant prévu de façon à permettre la mise en position transitoire de la charnière inférieure. La mise en référence géométrique finale de cette charnière 10 est ensuite obtenue par le serrage du gabarit sur la porte 30.

Le gabarit d'assemblage décrit ci-dessus présente de nombreux avantages, parmi lesquels les avantages suivantes :
- il est très facilement manoeuvrable à la main,
- il est d'une grande précision et d'une grande fiabilité en géométrie,
- il est adapté aux fortes cadences de production automobile, par exemple de 1500 véhicules par jour, comme aux petites cadences,
- il constitue un investissement peu coûteux, qui permet des économies substantielles, en évitant, par exemple, des retouches sur les portes des véhicules en bout de ligne de fabrication.

## Revendications

1. Dispositif d'assemblage des charnières supérieure et inférieure sur une porte de véhicule, en particulier de véhicule automobile, qui présente la forme d'un gabarit **caractérisé en ce qu'**il comporte les moyens suivants, pris en combinaison :
- des moyens d'appui et de serrage (41) pour positionner le gabarit sur la porte de véhicule,
- des moyens de maintien du gabarit (44) en forme de crochet pour garantir le placage du gabarit selon la direction en X.
- des moyens de mise en référence géométrique en X, Y, Z et de bridage (42) de la charnière supérieure (20) sur le gabarit, et
- des moyens de mise en référence géométrique en X, Y, Z et de bridage (43) de la charnière inférieure (10) sur le gabarit.

2. Dispositif d'assemblage selon la revendication 1, **caractérisé en ce que** lesdits moyens d'appui et de serrage (41) pour positionner le gabarit sur la porte de véhicule comprennent une touche d'appui (50) pour le positionnement du gabarit sur la porte selon la direction en Y.

3. Dispositif selon la revendication 2, **caractérisé en ce que** lesdits moyens d'appui et de serrage (41) pour positionner le gabarit sur la porte de véhicule comprennent aussi une touche d'appui auxiliaire (51) faisant fonction de positionnement auxiliaire selon la direction en X pour supprimer la rotation possible du gabarit, ladite touche d'appui auxiliaire (51) étant constituée par une face sensiblement perpendiculaire au panneau de la porte.

4. Dispositif selon la revendication 1, **caractérisé en ce que** lesdits moyens de maintien (44) du gabarit, qui permettent de garantir le placage du gabarit selon la direction en X, sont constitués par un crochet (60), qui s'insère dans un trou de passage de la porte du véhicule et qui .

5. Dispositif selon la revendication 4, **caractérisé en ce que** le dit trou de passage est le trou de passage (61) du faisceau électrique.

6. Dispositif selon la revendication 1, caractérisé e ce que lesdits moyens de mise en référence géométrique en X, Y, Z et de bridage (42) de la charnière supérieure (20) sur le gabarit comprennent un plan d'appui en Y qui vient se plaquer sur une surface plane (21A) du charnon fixe (21) de la charnière supérieure (20), ladite surface plane (21A) étant la surface de la charnière supérieure (20) destinée à venir en contact avec la caisse du véhicule.

7. Dispositif selon la revendication 6, **caractérisé en ce qu'**un premier trou de passage (23) d'une vis de fixation de la charnière supérieure (20) sur la caisse est utilisé pour le pilotage de la charnière supérieure (20) sur le gabarit, et **en ce qu'**un second trou de passage (24) d'une seconde vis de fixation de la charnière supérieure (20) sur la caisse est utilisé pour éviter la rotation de ladite charnière (20).

8. Dispositif selon la revendication 1, **caractérisé en ce que** lesdits moyens de mise en référence géométrique en X, Y, Z et de bridage (43) de la charnière inférieure (10) sur le gabarit comprennent un plan d'appui en Y qui vient se plaquer sur une surface plane (11A) du charnon fixe (11) de la charnière inférieure (10), ladite surface plane (11A) étant la surface de la charnière inférieure (10) destinée à venir en contact avec la caisse du véhicule.

9. Dispositif selon la revendication 8, **caractérisé en ce qu'**un premier trou de passage (13) d'une vis de fixation de la charnière inférieure (10) sur la caisse est utilisé pour le pilotage de la charnière inférieure (10) selon les directions en X et en Z sur le gabarit, et **en ce qu'**un second trou de passage (14) d'une seconde vis de fixation de la charnière inférieure (10) sur la caisse est utilisé pour éviter la rotation de ladite charnière (10).

10. Dispositif selon l'une quelconque des revendications 7 et 9, **caractérisé en ce qu'**un jeu d'environ 1 mm sur le diamètre dudit second trou de passage (24 ; 14) est prévu de façon à permettre la mise en position transitoire de la charnière (20 ; 10).

11. Procédé d'assemblage des charnières supérieure et inférieure sur une porte de véhicule au moyen d'un dispositif d'assemblage, appelé aussi « gabarit », conforme à l'une quelconque des revendications 1 à 10, **caractérisé en ce qu'**il comporte les étapes suivantes, prises en combinaison :
- on place les charnières supérieure (20) et inférieure (10) sur le gabarit,
- on vient indexer la charnière inférieure (10) sur la porte,
- on place le crochet (60) de maintien du gabarit dans le trou de passage (61) du faisceau électrique,
- on met en place les moyens d'appui et de serrage pour positionner le gabarit sur la porte de véhicule, en plaçant la touche d'appui (50) sur le cadre de la porte,
- on bloque l'ensemble du gabarit sur la porte du véhicule, et
- on visse les charnières supérieure (20) et inférieure (10) sur la porte du véhicule.

## Claims

1. Device for assembling top and bottom hinges on a door of a vehicle, in particular a motor car, which is in the form of a template, **characterised in that** it comprises the following means, taken in combination:
- support and clamping means (41) for positioning the template on the vehicle door,
- means of holding the template (44), in the form of a hook, for guaranteeing the placing of the template in the X direction,
- means (42) for putting the top hinge (20) in geometric reference along X, Y and Z and clamping it on the template, and
- means (43) for putting the bottom hinge (10) in geometric reference along X, Y and Z and clamping it on the template.

2. Assembly device according to claim 1, **characterised in that** said support and clamping means (41) for positioning the template on the vehicle door comprise a support key (50) for positioning the template on the door in the Y direction.

3. Device according to claim 2, **characterised in that** said support and clamping means (41) for positioning the template on the vehicle door also comprise an auxiliary support key (51) serving for auxiliary positioning in the X direction in order to eliminate the possible rotation of the template, said auxiliary support key (51) being formed by a face substantially perpendicular to the door panel.

4. Device according to claim 1, **characterised in that** said means (44) for holding the template, which guarantee the placing of the template in the X direction, are formed by a hook (60) that is inserted in a passage hole in the vehicle door and that.

5. Device according to claim 4, **characterised in that** said passage hole is the passage hole (61) for the electrical harness.

6. Device according to claim 1, **characterised in that** said means (42) for putting the top hinge (20) in geometric reference along X, Y and Z and clamping it on the template comprise a support plane in terms of Y that is pressed on a flat surface (21 A) of the fixed knuckle (21) of the top hinge (20), said flat surface (21 A) being the surface of the top hinge (20) intended to come into contact with the vehicle body.

7. Device according to claim 6, **characterised in that** a first passage hole (23) for a screw for fixing the top hinge (20) to the body is used for locating the top hinge (20) on the template, and **in that** a second passage hole (24) for a second screw for fixing the top hinge (20) on the body is used for preventing the rotation of said hinge (20).

8. Device according to claim 1, **characterised in that** said means (43) for putting the bottom hinge (10) in geometric reference along X, Y and Z and clamping it on the template comprise a support plane along Y that is pressed on a flat surface (11A) of the fixed knuckle (11) of the bottom hinge (10), said flat surface (11A) being the surface of the bottom hinge (10) intended to come into contact with the vehicle body.

9. Device according to claim 8, **characterised in that** a first passage hole (13) for a screw for fixing the bottom hinge (10) to the body is used for locating the bottom hinge (10) in the directions X and Z on the template, and **in that** a second passage hole (14) for a second screw for fixing the bottom hinge (10) on the body is used for preventing the rotation of said hinge (10).

10. Device according to either one of claims 7 and 9, **characterised in that** a clearance of approximately 1 mm on the diameter of said second passage hole (24; 14) is provided so as to allow the temporary positioning of the hinge (20; 10).

11. Method of assembling top and bottom hinges on a vehicle door by means of an assembly device, also referred to as a "template", according to anyone of claims 1 to 10, **characterised in that** it comprises the following steps, taken in combination:
- the top (20) and bottom (10) hinges are placed on the template,
- the bottom hinge (10) is located on the door,
- the hook (60) for holding the template is placed in the passage hole (61) for the electrical harness,
- the support and clamping means for positioning the template on the vehicle door are positioned, placing the support key (50) on the door frame,
- the whole of the template is locked on the vehicle door, and
- the top (20) and bottom (10) hinges are screwed on the vehicle door.

## Patentansprüche

1. Vorrichtung zum Montieren von oberen und unteren Scharnieren auf der Türe eines Fahrzeuges, im Speziellen eines Kraftfahrzeuges, die die Form einer Schablone aufweist, **dadurch gekennzeichnet, dass** sie die folgenden Geräte umfasst, die gemeinsam angewandt werden:
- Auflage- und Klemmgeräte (41) zum Positionieren der Schablone auf der Fahrzeugtüre,
- Geräte zum Festhalten der Schablone (44) in Form eines Hakens, um zu gewährleisten, dass die Schablone in der X Richtung gehalten wird.
- Geräte zur geometrischen Referenzierung in X, Y, Z und zum Klemmen (42) des oberen Scharniers (20) auf der Schablone, und
- Geräte zur geometrischen Referenzierung in X, Y, Z und zum Klemmen (43) des unteren Scharniers (10) auf der Schablone.

2. Montagevorrichtung nach Anspruch 1, **dadurch gekennzeichnet, dass** die besagten Auflage- und Klemmgeräte (41) zum Positionieren der Schablone auf der Fahrzeugtüre eine Auflagetaste (50) zum Positionieren der Schablone auf der Türe in der Y Richtung umfassen.

3. Vorrichtung nach Anspruch 2, **dadurch gekennzeichnet, dass** die besagten Auflage- und Klemmgeräte (41) zum Positionieren der Schablone auf der Fahrzeugtüre auch eine Hilfs-Auflagetaste (51) umfassen, die als Hilfspositionierung in der X Richtung fungieren, um das mögliche Verdrehen der Schablone zu verhindern, wobei die besagte Hilfs-Auflagetaste (51) durch eine Fläche gebildet wird, die in etwa normal zum Türblatt steht.

4. Vorrichtung nach Anspruch 1, **dadurch gekennzeichnet, dass** die besagten Haltevorrichtungen (44) der Schablone, anhand derer die Schablone in der X Richtung gehalten werden kann, durch einen Haken (60) gebildet werden, der durch ein Durchgangsloch der Fahrzeugtüre geführt wird, und der.

5. Vorrichtung nach Anspruch 4, **dadurch gekennzeichnet, dass** das besagte Durchgangsloch das Durchgangsloch (61) für den Kabelbaum ist.

6. Vorrichtung nach Anspruch 1, **dadurch gekennzeichnet, dass** die besagten Geräte zur geometrischen Referenzierung in X, Y, Z und zum Klemmen (42) des oberen Scharniers (20) auf der Schablone eine Auflageebene in Y umfassen, die auf einer ebenen Fläche (21 A) der festen Scharnierhälfte (21) des oberen Scharniers (20) aufliegt, wobei die besagte ebene Fläche (21 A) die Oberfläche des oberen Scharniers (20) ist, die dazu bestimmt ist, mit der Karosserie des Fahrzeugs in Kontakt zu treten.

7. Vorrichtung nach Anspruch 6, **dadurch gekennzeichnet, dass** ein erstes Durchgangsloch (23) einer Befestigungsschraube des oberen Scharniers (20) an der Karosserie zur Leitung des oberen Scharniers (20) auf der Schablone verwendet wird, und dadurch dass ein zweites Durchgangsloch (24) einer zweiten Befestigungsschraube des oberen Scharniers (20) an der Karosserie verwendet wird, um ein Verdrehen des besagten Scharniers (20) zu vermeiden.

8. Vorrichtung nach Anspruch 1, **dadurch gekennzeichnet, dass** die besagten Geräte zur geometrischen Referenzierung in X, Y, Z und zum Klemmen (43) des unteren Scharniers (10) auf der Schablone eine Auflageebene in Y umfassen, die auf einer ebenen Fläche (11A) der festen Scharnierhälfte (11) des unteren Scharniers (10) aufliegt, wobei die besagte ebene Fläche (11A) die Oberfläche des unteren Scharniers (10) ist, die dazu bestimmt ist, mit der Karosserie des Fahrzeugs in Kontakt zu treten.

9. Vorrichtung nach Anspruch 8, **dadurch gekennzeichnet, dass** ein erstes Durchgangsloch (13) einer Befestigungsschraube des unteren Scharniers (10) an der Karosserie zur Leitung des unteren Scharniers (10) in X- und Z-Richtung auf der Schablone verwendet wird, und dadurch dass ein zweites Durchgangsloch (14) einer zweiten Befestigungsschraube des unteren Scharniers (10) an der Karosserie verwendet wird, um ein Verdrehen des besagten Scharniers (10) zu vermeiden.

10. Vorrichtung nach irgendeinem der Ansprüche 7 und 9, **dadurch gekennzeichnet, dass** ein Spiel von etwa 1 mm im Durchmesser des besagten zweiten Durchgangsloches (24; 14) vorgesehen ist, um die Übergangspositionierung des Scharniers (20; 10) zu ermöglichen.

11. Verfahren zum Montieren von oberen und unteren Scharnieren auf einer Fahrzeugtüre mithilfe einer Montagevorrichtung, die auch "Schablone" genannt wird, gemäß einem der Ansprüche 1 bis 10, **dadurch gekennzeichnet, dass** es die folgenden Schritte umfasst, die gemeinsam angewandt werden:
- man legt das obere (20) und das untere (10) Scharnier in die Schablone ein,
- man indexiert die untere Schablone (10) auf der Türe,
- man setzt den Haken (60) zum Festhalten der Schablone im Durchgangsloch (61) für den Kabelbaum an,
- man bringt die Auflage- und Klemmgeräte zum Positionieren der Schablone auf der Fahrzeugtüre an, indem man die Auflagetaste (50) auf dem Türrahmen platziert,
- man blockiert die gesamte Schablone auf der Fahrzeugtüre, und
- man schraubt das obere (20) und untere (10) Scharnier auf die Fahrzeugtüre.
